# EUROPEAN PATENT APPLICATION

(11) **EP 4 141 070 A1**
(43) Date of publication of application: **01.03.2023**
(21) Application number: 21894916.2
(22) Date of filing: 22.10.2021
(51) Int. Cl.: C08L 25/06, C08L 57/02, C08K 5/37, C09D 125/06

(54) **RESIN COMPOSITION, METHOD FOR PRODUCING SAME, AND COATING COMPOSITION COMPRISING SAME**

(30) Priority: 20.11.2020 KR 20200156933
(71) Applicant: Kolon Industries, Inc., Seoul 07793 (KR)
(72) Inventor: KIM, Myung Jong, Seoul 07793 (KR); SON, Jeong Soon, Seoul 07793 (KR)
(74) Representative: Ter Meer Steinmeister & Partner
(86) International application number: PCT/KR2021/014944
(87) International publication number: WO 2022/108144

(57) **Abstract**

The present invention relates to a resin composition including a modified petroleum resin having a structure in which a molecular weight regulator is bonded to at least one terminus of both terminuses of an at least partially hydrogenated or non-hydrogenated petroleum resin, wherein the modified petroleum resin comprises at least one styrene monomer-derived unit structure, wherein a Gardner color of the resin composition is 10 or less.

## Description

### TECHNICAL FIELD

The present invention relates to a resin composition, a method of preparing the same, and a coating composition and a paint composition including the resin composition.

### BACKGROUND ART

Paint or a coating material is manufactured by blending the main materials such as a resin, a curing agent, a solvent, a pigment, and other additives. Commonly used resins for paint may be polyester, epoxy, or acrylic resins, but an appropriate resin may be selected according to the purpose and method of use.

Paint may be used in various areas, for example, wall painting, traffic line work, ship coating, coating of metal aggregates, etc. Depending on the field of application, paints are required to have temperature change during coating and weather resistance after coating. Particularly, in the case of paint for ships, the viscosity of the paint may increase as inorganic particles, for example, talc and ceramic particles are included as additives, and as a result, the flexibility of the paint is lowered, which causes cracks or separation of the coating film after application. To solve this problem, various diluents have been studied, but there is still a need for a diluent capable of sufficiently lowering the viscosity of the paint and sufficiently increasing adhesion.

In addition, since a low-viscosity resin recently developed for the use as a diluent has a color, there is still a problem in that a color change may occur due to the resin during the manufacture of paint.

Accordingly, there is still the need for a substantially transparent low-viscosity resin that not only imparts low-viscosity to the paint but also has improved color that does not cause a color change.

### DESCRIPTION OF EMBODIMENTS

### TECHNICAL PROBLEM

The object of the present invention is to provide a resin composition simultaneously having a low viscosity and a Gardner color of 10 or less, and a paint and a rubber composition for tire including the resin composition.

### SOLUTION TO PROBLEM

According to an aspect of an embodiment, provided is a resin composition including a modified petroleum resin having a structure in which a molecular weight regulator is bonded to at least one terminus of both terminuses of an at least partially hydrogenated or non-hydrogenated petroleum resin, wherein the modified petroleum resin includes at least one styrene monomer-derived unit structure,
wherein a Gardner color of the resin composition is 10 or less.

According to another aspect of an embodiment, provided is a coating material including the resin composition.

According to another aspect of an embodiment, provided is a paint including the coating material.

According to another aspect of an embodiment, provided is a method of preparing a resin composition, the method including: performing polymerization by adding a polymerization catalyst and/or heat to a solution including at least one selected from a C₅ monomer, a C₅ mixed oil fraction, a C₉ monomer, a C₉ mixed oil fraction, a cyclic diolefin monomer, and a linear olefin monomer; and a molecular weight regulator to obtain a polymerization product,
wherein a Gardner color of the resin composition is 10 or less.

### ADVANTAGEOUS EFFECTS OF DISCLOSURE

When a coating material according to the present invention includes a resin composition having a Gardner color of 10 or less and a low viscosity, the coating material may provide low viscosity to paint, as well as improving the color, and there are advantages of tire braking, fuel economy, and abrasion reduction due to the excellent miscibility with rubber.

### MODE OF DISCLOSURE

Hereinafter, various aspects and various embodiments of the present invention will be described in further detail.

As used herein, the term "petroleum resin" includes a polymer prepared by polymerizing at least one selected from C₅ monomer, C₅ mixed oil fraction, C₉ monomer, C₉ mixed oil fraction, cyclic diolefin monomer, and a linear olefin monomer. For example, the petroleum resin includes a homopolymer or a copolymer. Examples of the homopolymer of the petroleum resin may include a polymer in which a C₅ monomer is polymerized, a polymer in which a C₅ mixed oil fraction is polymerized, a polymer in which a C₉ monomer is polymerized, a polymer in which a C₉ mixed oil fraction is polymerized, a polymer in which a cyclic diolefin monomer is polymerized, and a polymer in which a linear olefin monomer is polymerized. Examples of the copolymer of the petroleum resin may include a copolymer in which two different types of C₅ monomers are polymerized, a copolymer in which two different types of C₉ monomers are polymerized, a copolymer in which two different types of cyclic diolefin monomers are polymerized, a copolymer in which two different types of linear olefin monomers are polymerized, a copolymer in which a C₅ oil fraction and a C₅ monomer are polymerized, a copolymer in which a C₅ oil fraction and a C₉ monomer are polymerized, a copolymer in which a C₉ oil fraction and a C₅ monomer are polymerized, a copolymer in which a C₅ monomer and a C₉ monomer are polymerized, a copolymer in which a C₉ oil fraction and a C₉ monomer are polymerized, a copolymer in which a C₅ oil fraction and a linear olefin monomer are polymerized, a copolymer in which a C₉ oil fraction and a linear olefin monomer are polymerized, a copolymer in which a C₅ oil fraction and a cyclic diolefin monomer are polymerized, a copolymer in which a C₉ oil fraction and a cyclic diolefin monomer are polymerized, a copolymer in which a C₅ monomer and a cyclic diolefin monomer are polymerized, a copolymer in which a C₉ monomer and a linear olefin monomer are polymerized, and a copolymer in which a cyclic diolefin monomer and a linear olefin monomer are polymerized.

As used herein, the term "hydrogenated petroleum resin" may refer to a petroleum resin in which at least a part of an unsaturated moiety, such as ethylene, is modified into a saturated hydrocarbon by hydrogenation among the above-described petroleum resins.

As used herein, the term "Cs (mixed) oil fraction" includes aliphatic C₅ and C₆, paraffins, olefins, and diolefins derived from naphtha cracking. For example, a C₅ oil fraction may include pentene, isoprene, 2-methyl-2-butene, 2-methyl-2-pentene, cyclopentadiene, and piperylene, but embodiments are not limited thereto, and may include a mixture of at least two selected from C₅ monomers. Also, the C₅ oil fraction may be optionally alkylated.

As used herein, the term "Cs monomer" indicates any one selected from components included in the C₅ (mixed) oil fraction.

As used herein, the term "C₉ (mixed) oil fraction" includes Cs, C₉, and/or C₁₀ olefins that boil at the atmospheric pressure and a temperature in a range of about 100 °C to about 300 °C, as compositions derived from petroleum processing, for example, cracking, as is commonly understood in the art to which the present invention belongs, and may include, for example, vinyltoluene, α-methylstyrene, styrene, dicyclopentadiene, indene, trans-beta-methylstyrene, and methylindene, but embodiments are not limited thereto, and the (mixed) oil fraction includes all mixtures of at least two selected from C₉ monomers. Also, the C₉ oil fraction may be optionally alkylated. For example, the C₉ oil fraction in the present invention may include vinyltoluene, indene, styrene, dicyclopentadiene, and alkylated derivatives of these components, such as α-methylstyrene, methylindene, and the like.

As used herein, the term "C₉ monomer" indicates any one selected from components included in the C₉ oil fraction.

As used herein, the term "olefin" includes an unsaturated compound including at least one ethylenically unsaturated (C=C) bond. For example, an olefin may include a linear olefin, a cyclic olefin, or an α-olefin, but embodiments are not limited thereto.

As used herein, the term "cyclic diolefin" includes a cyclic unsaturated compound including two C=C bonds. For example, a cyclic diolefin may include, but not limited to, dicyclopentadiene, tricyclopentadiene, and the like.

One aspect of the present invention is related to a method of preparing a resin composition, the method including performing polymerization by adding a polymerization catalyst and/or heat to a solution including at least one selected from a C₅ monomer, a C₅ mixed oil fraction, a C₉ monomer, a C₉ mixed oil fraction, a cyclic diolefin monomer, and a linear olefin monomer; and a molecular weight regulator to obtain a polymerization product, wherein the modified petroleum resin includes at least one styrene monomer-derived unit structure, wherein a Gardner color of the resin composition is 10 or less.

According to an embodiment, the solution may further include a viscosity regulator. In this regard, a viscosity of the polymerization product may be easily controlled.

Since the viscosity regulator does not participate formation of a structure of a polymer, which is a product but serves as a regulator that controls viscosities of reactants and products, a polymerization product according to the present invention prepared by performing polymerization by adding a polymerization catalyst and/or heat to a solution including at least one selected from a C₅ monomer, a C₅ mixed oil fraction, a C₉ monomer, a C₉ mixed oil fraction, a cyclic diolefin monomer, and a linear olefin monomer; a molecular weight regulator; and a viscosity regulator may be a mixture of a modified polymer and a viscosity regulator.

According to an embodiment, the solution may include a styrene monomer and a xylene solvent. Here, the styrene monomer refers to a pure styrene monomer. A petroleum resin thus obtained has a Gardner color of 10 or less. For example, a Gardner color of the petroleum resin may be in a range of 0 to 10, 1 to 10, 1 to 10, 3 to 10, or 4 to 10.

According to an embodiment, the method may further include hydrogenating the petroleum resin in the presence of a catalyst to modify the petroleum resin into a hydrogenated petroleum resin.

The catalyst used in the hydrogenating may be a hydrogenation catalyst commonly known in the art of a petroleum resin, and examples of the hydrogenation catalyst may be Pd, Ni, Pt, or mixtures thereof.

According to an embodiment, the xylene solvent may be added to prevent deterioration of processibility due to densification of the monomer caused by addition of the styrene monomer. For example, the styrene monomer and the xylene solvent may be added in the solution at a ratio in a range of 4:1 to 1:1 based on weight. For example, the styrene monomer and the xylene solvent may be added in the solution at a ratio in a range of 3:1 to 1:1, 3:1 to 1.2:1, 2.5:1 to 1.2:1, or 2.3:1 to 1.2:1 based on weight.

In addition, the xylene solvent is added to control the monomer concentration in the polymerization system increased by the addition of pure styrene monomer, and heat generation due to the increase in the monomer concentration during polymerization may be prevented through the addition of the xylene solvent.

According to an embodiment, an amount of the molecular weight regulator may be in a range of greater than 0 parts and equal to or less than 15 parts by weight based on 100 parts by weight of the total weight of the resin composition, and an amount of the viscosity regulator may be in a range of greater than 0 parts and equal to or less than 40 parts by weight based on 100 parts by weight of the total weight of the resin composition.

For example, an amount of the molecular weight regulator may be in a range of 1 part to 10 parts by weight, 1 part to 5 parts by weight, 1 part to 2.5 parts by weight, or 1 part to 1.4 parts by weight.

For example, an amount of the viscosity regulator may be in a range of 10 parts to 30 parts by weight or 15 parts to 25 parts by weight.

When the amounts of the molecular weight regulator and the viscosity regulator are within these ranges, a low-viscosity petroleum resin having good compoundability with a raw coating material may be prepared. When the molecular weight regulator is not included, a petroleum resin having a high molecular weight and a high viscosity may be obtained, and when an amount of the molecular weight regulator is greater than 15 parts by weight, a viscosity may be overly decreased or a degree of polymerization may be lowered, which may result in deterioration of coating properties of the final product (e.g., paint). Also, the viscosity regulator is added to lower a viscosity of the modified petroleum resin, which may be added as needed, but when an amount of the viscosity regulator is greater than 40 parts by weight, a viscosity may be overly decreased, which may result in deterioration of coating properties of the final product (e.g., paint). Thus, the molecular weight regulator and the viscosity regulator need to be compounded at an appropriate ratio.

According to an embodiment, a molecular weight regulator that may be used in the present invention may be a chain transfer agent, and examples of the chain transfer agent may include thiols or halocarbons such as carbon tetrachloride.

For example, the molecular weight regulator may be a thiol, i.e., an organic mercaptan-based molecular weight regulator including at least one thiol group (-SH), and examples of the organic mercaptan-based molecular weight regulator may include aliphatic mercaptans, cycloaliphatic mercaptans, or aromatic mercaptans.

The mercaptans may include 1 to 4 thiol groups per molecule, and 1 to 20 carbons, preferably 1 to 15 carbons, per thiol group.

Also, the mercaptans may further include other substituents in addition to the hydrocarbon group and thiol group, and examples of the substituents may include a hydroxyl group, a carboxylic acid group, an ether group, an ester group, a sulfide group, an amine group, and an amide group.

The mercaptans useful as molecular weight regulators in the present invention are not particularly limited as long as those are organic compounds having a thiol group, and, in particular, may be alkyl mercaptans such as ethyl mercaptan, butyl mercaptan, hexyl mercaptan, octyl mercaptan, or dodecyl mercaptan; thiol phenols such as phenyl mercaptan or benzyl mercaptan; mercaptans containing a hydroxyl group or a carboxylic acid group such as 2-mercaptoethanol, thioglycolic acid, or 3-mercaptopropionic acid; or mercaptans having two or more functional groups such as pentaerythritol tetrakis(3-mercapto) propionate; or mixtures of at least two or more selected therefrom.

Examples of such mercaptans include, but not limited to, methyl mercaptan, ethyl mercaptan, butyl mercaptan, octyl mercaptan, lauryl mercaptan, mercaptoethanol, mercaptopropanol, mercaptobutanol, mercaptoacetic acid, mercaptopropionic acid, benzyl mercaptan, phenyl mercaptan, cyclohexyl mercaptan, 1-thioglycerol, 2,2'-dimercaptodiethyl ether, 2,2'-dimercaptodipropyl ether, 2,2'-dimercaptodiisoprolpyl ether, 3,3'-dimercaptodipropyl ether, 2,2'-dimercaptodiethyl sulfide, 3,3'-dimercaptodipropyl sulfide, bis(β-mercaptoethoxy)methane, bis(β-mercaptoethylthio)methane, trimethylolpropane trithioglycolate, and pentaerythritol tetrathioglycolate.

According to an embodiment, examples of the molecular weight regulator of the present invention may include ethyl mercaptan, butyl mercaptan, hexyl mercaptan, octyl mercaptan, dodecyl mercaptan; phenyl mercaptan, benzyl mercaptan; mercaptoethanol, thiolglycolic acid, mercaptopropionic acid; and pentaerythritol tetrakis(3-mercapto)propionate.

For example, when n-dodecyl mercaptan of Formula 1, 2-mercaptoethanol of Formula 2, or a mixture thereof is used as a molecular weight regulator in the present invention, the effect of the molecular weight regulator may be maximized.

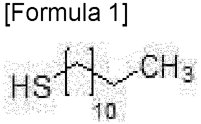

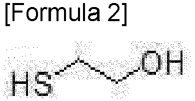

According to an embodiment a low-viscosity liquid resin having a viscosity (at 25 °C) in a range of 20 cps to 500 cps may be used as the viscosity regulator, and any liquid resin having a viscosity within this range may be used without particular limitation as a viscosity regulator for a resin composition according to an embodiment of the present invention.

For example, the low-viscosity liquid resin may be selected from hydrogenated dicyclopentadiene (DCPD)-C₉ copolymer resins, hydrogenated DCPD resins, and mixtures thereof.

Here, the hydrogenated DCPD-C₉ copolymer resin refer to a white thermoplastic resin obtained by polymerization and hydrogenation of DCPD, and as the hydrogenated DCPD-C₉ copolymer resin, a commercial resin such as SUKOREZ^{®} resin may be used.

For example, when the hydrogenated DCPD-C₉ copolymer resin having the following structure is used as a viscosity regulator, the effect of viscosity control and improvement of air-permeation resistance may be maximized.

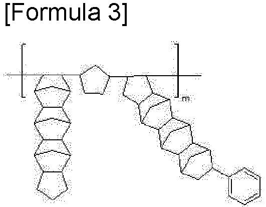

According to an embodiment, one selected from a Lewis acid catalyst, a halohydric acid, AlCl₃, BF₃, and mixtures of at least two therefrom may be used as the polymerization catalyst.

Preferably, a Lewis acid catalyst selected from AlCl₃, BF₃, SnCl₄, TiCl₄, AgClC₄, I₂, and mixtures of at least two therefrom may be used as the polymerization catalyst.

According to an embodiment, the adding of heat may be performed by increasing a temperature to 100 °C to 300 °C.

One aspect the present invention is related to a resin composition including a modified petroleum resin having a structure in which a molecular weight regulator is bonded to at least one terminus of an at least partially hydrogenated or non-hydrogenated petroleum resin; and a viscosity regulator, wherein the modified petroleum resin includes at least one styrene monomer-derived unit structure, wherein a Gardner color of the resin composition is 10 or less.

According to an embodiment, the petroleum resin or hydrogenated petroleum resin may include a styrene monomer as a polymerization raw material.

Here, the styrene monomer refers to a pure styrene monomer, and when the pure styrene monomer is included as a polymerization raw material, the petroleum resin may have the effect of color improvement. For example, the modified petroleum resin may have a Gardner color in a range of greater than 0 to 10 or less or 1 or greater to 10 or less. When the Gardner color of the resin composition is within these ranges, not only the color change of the paint to which the resin composition is blended may be prevented, but also an amount of the pigment added for whiteness may be reduced, and thus the resin composition is economically preferable.

According to an embodiment, an amount of the styrene monomer-derived unit structure may be in a range of greater than 0 parts to less than 100 parts by weight based on 100 parts by weight of the modified petroleum resin.

For example, an amount of the styrene monomer-derived unit structure may be in a range of 13 parts to 95 parts by weight, 15 parts to 90 parts by weight, 20 parts to 85 parts by weight, or 27 parts to 80 parts by weight based on 100 parts by weight of the modified petroleum resin, but embodiments are not limited thereto.

According to an embodiment, the modified petroleum resin is prepared by polymerizing at least one selected from the C₅ monomer, C₅ mixed oil fraction, C₉ monomer, C₉ mixed oil fraction, cyclic diolefin monomer, and linear olefin monomer and modifying the at least partially hydrogenated or non-hydrogenated petroleum resin using the molecular weight regulator. When the petroleum resin includes the styrene monomer-derived unit structure, a petroleum resin having a lower Gardner color, e.g., 10 or less, than that of a conventional petroleum resin not including a styrene monomer-derived unit structure, may be obtained.

According to an embodiment, the modified petroleum resin has a structure in which at least one selected from the C₅ monomer, C₅ mixed oil fraction, C₉ monomer, C₉ mixed oil fraction, cyclic diolefin monomer, and linear olefin monomer is polymerized by addition polymerization or chain polymerization, and a structure in which the molecular weight regulator is bonded to at least one terminus of both terminuses of an at least partially hydrogenated or non-hydrogenated petroleum resin.

For example, the petroleum resin may include at least one unit structure derived from a C₉ mixed oil fraction or a repetition unit derived from a C₉ mixed oil fraction.

According to an embodiment, examples of the unit structure derived from a C₉ mixed oil fraction may include vinyltoluene, α-methylstyrene, styrene, dicyclopentadiene, indene, and methylindene.

According to an embodiment, the petroleum resin may include structure to which a repetition unit represented by Formula 4a, Formula 4b, or Formula 4c is bonded. Here, although not shown in the drawings, the styrene monomer-derived repetition unit in the petroleum resin may occupy 60 % to 95%, for example, 75 % to 95 %, of repetition units in the petroleum resin.

According to an embodiment, the petroleum resin includes a structure to which a repetition unit of Formula 4a is bonded. For example, the petroleum resin may include the following structure formed when a monomer such as styrene, α-methylstyrene, vinyltoluene, indene, methylindene, dicyclopentadiene, and α-methylstyrene or methylindene included in the C₉ mixed oil fraction or an alkylated derivative monomer of these components such as methylindene participates in polymerization.

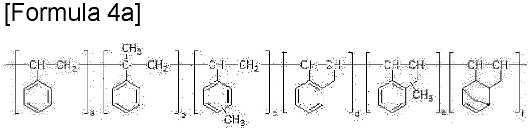

Formula 4a is merely an example, and thus the petroleum resin may include repetition units derived from other C₅ monomers, C₉ monomers, cyclic-diolefin monomers, and linear olefin monomers that are not shown in Formula 4a.

For example, the petroleum resin may be a polymer including the above structure, the polymer refers to a random polymer, but not limited thereto, and may include a block copolymer or an alternating copolymer.

Although not shown in the drawing, the petroleum resin may include a structure in which at least one of the repetition units shown in Formula 4a is hydrogenated.

According to another embodiment, the petroleum resin may include a structure to which the following repetition unit is bonded. For example, the petroleum resin has a structure in which one terminus of both terminuses have a double bond, and a structure in which both terminuses having a double bond is shown in Formula 4b as an example.

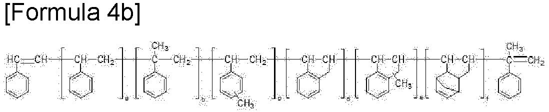

In this regard, the double bond located at the at least one terminus and the molecular weight regulator are bonded, and thus a petroleum resin (e.g, a polymer of a C₉ monomer) modified using a molecular weight regulator is formed. The molecular weight regulator may be bonded to both of the terminuses or may be bonded to any one of the two terminuses as shown in Formula 4c shown as an example.

Although not shown in the drawing, the petroleum resin may include a structure in which at least one of the repetition units shown in Formula 4b or 4c is hydrogenated.

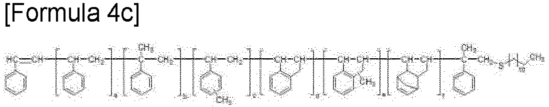

According to an embodiment, the resin composition may have a number average molecular weight (Mₙ) in a range of 200 to 400, a weight average molecular weight (Mw) in a range of 400 to 700, a Z-average molecular weight (Mz) in a range of 650 to 5000, and a dispersion degree in a range of 1 to 3. Preferably, the resin composition may have a number average molecular weight (Mₙ) in a range of 200 to 350, a weight average molecular weight (Mw) in a range of 400 to 570, a Z-average molecular weight (Mz) in a range of 650 to 5000, and a dispersion degree in a range of 1.5 to 3.

When the number average molecular weight is lower than 200, the compounding efficiency may be reduced, and when the number average molecular weight is higher than 400, the compounding processibility may decrease. Also, due to the molecular weight in such low range, the processibility of the resin composition may be excellent, and thus the resin composition may be applied in low-viscosity paint, through which coating of an excellent coating film may be possible.

According to an embodiment, the resin composition has a viscosity at 25 °C in a range of 5,000 cps to 50,000 cps and a glass transition temperature in a range of -40 °C to -25 °C.

When the glass transition temperature is lower than -40 °C, not only volatility of the resin composition is high, but also the coating property of the resin composition may be reduced due to the low viscosity. When the glass transition temperature is higher than - 25 °C, a viscosity of the paint prepared using the resin composition is not sufficiently low that the processibility decreases, and cracks may occur in the coating material since sufficient flexibility of the paint is not secured.

According to an embodiment, the resin composition may further include a viscosity regulator.

According to an embodiment, an amount of the viscosity regulator may be in a range of greater than 0 parts and equal to or less than 40 parts by weight based on 100 parts by weight of the resin composition.

As described above, when the modified petroleum resin according to an embodiment of the present invention further includes a viscosity regulator, the modified petroleum resin may be obtained by performing polymerization by adding a polymerization catalyst and/or heat to a solution including at least one selected from a C₅ monomer, a C₅ mixed oil fraction, a C₉ monomer, a C₉ mixed oil fraction, a cyclic diolefin monomer, and a linear olefin monomer; a molecular weight regulator; and a viscosity regulator, wherein the viscosity regulator does not participate formation of a structure of a modified petroleum resin, which is a product, but controls viscosities of reactants and products, and thus a polymerization product may be a mixture of the modified polymer and the viscosity regulator.

Descriptions of the C₅ monomer, C₅ mixed oil fraction, C₉ monomer, C₉ mixed oil fraction, cyclic diolefin monomer, linear olefin monomer, and pure styrene monomer may refer to those described above, and various embodiments of the molecular weight regulator or the viscosity regulator are the same as described above.

According to an embodiment the resin composition may have a viscosity measured at a temperature of 25 °C in a range of 5,000 cps to 50,000 cps, for example, 5,000 cps to 17,000 cps or 5,000 cps to 15,000 cps.

The resin composition may have an aromaticity in a range of 25 % to 70 %, for example, 30 % to 60 % or 35 % to 50 %.

When the aromaticity of the resin composition is within these ranges, sufficient compatibility of the resin composition with paint is obtained, and thus a coating material having excellent processibility and durability may be formed.

One aspect of the present invention is related to a coating composition including a resin composition.

According to an embodiment, the coating composition may include a base resin, the resin composition, a curing agent, a curing accelerator, a pigment, additives, and a solvent.

The coating composition may not include a plasticizer according to the use of a low-viscosity resin composition.

According to an embodiment, the base resin may include an epoxy-based resin.

According to an embodiment, the curing agent may include a thermally curing agent, a light curing agent, or a UV curing agent commonly known in the art and may be appropriately selected therefrom according to the use.

According to an embodiment, the curing accelerator is added to control a curing rate of the curing agent and includes a sulfonic acid curing catalyst or a carbamate curing catalyst, wherein the curing accelerator may be appropriately selected from curing accelerators commonly known in the art as needed.

According to an embodiment, the paint is added to provide color or to increase whiteness to the coating composition and may include an inorganic paint such as titanium dioxide, but embodiments are not limited thereto, and any paint commonly known in the art may be appropriately selected and used. For example, the resin composition according to an embodiment of the present invention may reduce an added amount of the paint due to the Gardner chromaticity of 10 or less, for example in a range of 1 or greater to 10 or less, and thus the economic efficiency is improved.

According to an embodiment, the additives may include all components that may be compounded to a coating material, except a curing agent, a curing accelerator, a paint, and a solvent. For example, the additives may include a surface modifier, a light stabilizer, a weather resistance additive, a preservative, an appearance regulator, an antifoaming agent, a leveling agent, or a combination thereof. These additives may be appropriately selected among materials commonly used in the art.

According to an embodiment, the solvent may be selected from solvents having good miscibility with coating raw materials, and, for example, an organic solvent may be used.

The raw materials compounded with the coating composition described above may be appropriately compounded referring to the common composition in consideration of the purpose of use of one of ordinary skill in the art or the desired viscosity and color.

One aspect of the present invention is related to a rubber composition including raw rubber; and a resin composition according to one or more embodiments of the present invention.

According to an embodiment, the rubber composition may further include at least one selected from raw rubber, a reinforcing agent, a silane coupling agent, a vulcanization agent, and a vulcanization accelerator, in addition to the modified petroleum resin and the viscosity regulator.

The raw rubber may include natural rubber having an olefinic double bond, synthetic rubber having an olefinic double bond, or a combination thereof.

The raw rubber is not particularly limited as long as it is any rubber having an olefinic double bond (a carbon-carbon double bond), and natural rubber, synthetic rubber, or a mixture thereof may be used.

For example, the raw rubber may include at least one selected from the group consisting of natural rubber, butadiene rubber, nitrile rubber, silicone rubber, isoprene rubber, styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, halogenated isoprene rubber, halogenated isobutylene copolymer, chloroprene rubber, butyl rubber, and halogenated isobutylene-p-methylstyrene rubber.

The reinforcing agent may include carbon black and silica.

When the rubber composition includes carbon black, effects such improvement of abrasion resistance, improvement of rotational resistance properties, and prevention of cracks or cracks due to ultraviolet rays (prevention of UV-deterioration) may be obtained. Carbon black used in the present invention is not particularly limited, and any material commonly used as carbon black in the art may be used.

According to an embodiment, examples of the carbon black may include furnace black, acetylene black, thermal black, channel black, graphite, or a combination thereof.

For example, physical properties such as a particle diameter, a pore volume, or a specific surface area of carbon black are not particularly limited, and various carbon blacks such as SAF, ISAF, HAF, FEF, GPF, SRF (all of which are abbreviations for carbon black classified as ASTM standard D-1765-82a in the United States) which are used in the conventional rubber industry may be used.

In addition, the silica used as a reinforcing agent for rubber may be used without particular limitation, and examples the silica may include dry white carbon, wet white carbon, synthetic silicate white carbon, colloidal silica, and precipitated silica. Although a specific surface area of the silica is not particularly limited, the specific surface area may be generally in a range of 40 m²/g to 600 m²/g, for example, 70 m²/g to 300 m²/g, and a primary particle diameter of the silica may be in a range of 10 nm to 1000 nm. The examples of the silica may be used alone or may be used as a combination of at least two selected therefrom.

Examples of the reinforcing agent may include powders of minerals such as clay and talc; carbonates such as magnesium carbonate and calcium carbonate; and alumina hydrates such as aluminum hydroxide, in addition to the carbon black and silica, may be used.

According to an embodiment, the silane coupling agent is used to compound silica, wherein examples of the silane coupling agent may include vinyltrichlorosilane, vinyltriethoxysilane, vinyltris(β-methoxy-ethoxy)silane, β-(3,4-epoxycyclohexyl)-ethyltrimethoxysilane, 3-chloropropyltrimethoxysilane, 3-chloropropyltriethoxysilane, 3-mercaptopropyltrimethoxysilane, 3-mercaptopropyltriethoxysilane, bis(3-(triethoxysilyl)propyl)disulfide, bis(3-triethoxysilylpropyl)trisulfide, bis(3-(triethoxysilyl)propyl)tetrasulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilyIpropylbenzothiazolyltetrasulfide, 3-triethoxysilylpropylbenzolyltetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyltetrasuIfide, or a combination thereof. For example, the silane coupling agent may include bis(3-(triethoxysilyl)propyl)tetrasulfide.

The crosslinking agent may be any material commonly used in crosslinking of rubber, and may be appropriately selected according to the rubber component and the isobutylene-based polymer.

According to an embodiment, examples of the crosslinking agent may include sulfur crosslinking agents such as sulfur, morpholine disulfide, and alkylphenol disulfide; and organic peroxide crosslinking agents such as cyclohexanone peroxide, methylacetoacetate peroxide, tert-butyl peroxyisobutylate, tert-butyl peroxybenzoate, benzoyl peroxide, lauroyl peroxide, dicumyl peroxide, di-tert-butyl peroxide, and 1,3-bis(tert-butylperoxyisopropyl)benzene.

The crosslinking agent and the rubber composition for tire tread according to the present invention may include a vulcanization accelerator and a vulcanizing agent.

According to an embodiment, the vulcanization accelerator and vulcanizing agent are not particularly limited, and may be appropriately selected and used depending on the rubber component, the isobutylene polymer, and the crosslinking agent contained in the rubber composition. Herein, "vulcanization" indicates crosslinking via at least one sulfur atom.

Examples of the vulcanization accelerator may include thiuram-based accelerators such as tetramethylthiuram monosulfide, tetramethylthiuram disulfide, and tetraethylthiuram disulfide; thiazole accelerators such as 2-mercaptobenzothiazole and dibenzothiazyldisulfide; sulfenamide accelerators such as N-cyclohexyl-2-benzothiazylsulfenamide and N-oxydiethylene-2-benzothiazolylsulfenamide; aldehyde-amine accelerators such as n-butylaldehyde-aniline condensate and butyraldehyde-monobutylamine condensate; aldehyde-ammonia-based accelerators such as hexamethylenetetramine; and thiourea accelerators such as thiocarbanilide. When the vulcanization accelerator is compounded, one type of the vulcanization accelerator may be used, or at least two selected from the examples of the vulcanization accelerator may be used in combination.

Examples of the vulcanization agent may include metal oxides such as zinc oxide (zincification) and magnesium oxide; metal hydroxides such as calcium hydroxide; metal carbonates such as zinc carbonate and basic zinc carbonate; fatty acids such as stearic acid and oleic acid; aliphatic metal salts such as zinc stearate and magnesium stearate; amines such as n-butylamine and dicyclohexylamine; ethylene dimethacrylate; diallyl phthalate; N,N-m-phenylenedimaleimide; triallyl isocyanurate; and trimethylolpropane trimethacrylate. When the vulcanization agent is compounded, one type of the vulcanization agent may be used, or at least two selected from the examples of the vulcanization agent may be used in combination.

In addition, the rubber composition according to the present invention may include various additives used in the field of rubber industry, for example, one or at least two selected from an anti-aging agent, a vulcanization retarder, a peptizing agent, a process oil, and a plasticizer.

Moreover, the present invention provides a rubber molded article that is prepared using the rubber composition.

The rubber molded article according to an embodiment of the present invention may be a tire. For example, the rubber molded article may be a tire tread. The tire tread is prepared into a tire through a known method by selecting an appropriate compounding ratio of raw materials in consideration of the use and physical properties of the tire.

According to an embodiment, the rubber composition according to the present invention may be prepared by mixing each of the above components using a mixer such as a plastomill, a Banbury mixer, a roll, or an internal mixer. In particular, it is preferable to mix components other than the crosslinking agent and the vulcanization accelerator among the above components, and then to add the crosslinking agent and the vulcanization accelerator to the obtained mixture, followed by further mixing.

The rubber composition thus prepared using the method may be used as a material for constituting a tread portion (and a cap portion including a tread portion) which comes into contact with the road surface. According to the preparation method, the rubber composition is extruded according to the shape of the tire to be formed (particularly, the shape of the tread) and molded by a conventional method on a tire molding machine to produce an un-crosslinked molded body for tire. A tire tread is produced by heating and pressing the un-crosslinked molded body for tire, for example, in a vulcanizer, and a desired tire can be manufactured by assembling the obtained tire tread and other parts.

The tire thus manufactured is excellent in mechanical properties (hardness, tensile strength, modulus, etc.), chip and cut resistance, and adhesion performance to be possessed as a tire. Particularly, the manufactured tire has a high gripping property (wet) and thus is excellent in the driving stability of the vehicle, the traction property of the brake, and the relatively low rolling resistance, thereby realizing low fuel cost of the vehicle.

Accordingly, the composition for the tire tread of the present invention is suitable as a composition for obtaining a tread of the tire such as a low fuel cost tire and a high-performance tire.

Hereinafter, the present invention will be described in further detail with reference to the following Examples which are set forth for the purpose of illustration, and are not to be construed as abridging or limiting the scope of the present invention. In addition, based on the disclosure of the present invention including the following Examples, it is obvious that a person of ordinary skill in the art may readily perform a modification or revision of the present invention.

Also, the experimental data provided herein are only representative experimental results of Examples and Comparative Examples, and the effect of each of various embodiments of the present invention not definitely provided in the following will be described in detail at the corresponding part.

### [Example]

### Example 1: Preparation of resin composition

12.52 parts by weight of a purified C₉ oil fraction (available from YNCC), 20.0 parts by weight of a viscosity regulator, LP-A180 (available from Kolon Industries), 1.34 parts by weight of a molecular weight regulator, n-dodecyl mercaptan, 45.61 parts by weight of a styrene monomer, and 20.52 parts by weight of a solvent, xylene, were mixed, 0.15 parts by weight of a polymerization catalyst, BF₃, was added thereto, and polymerization of the mixture was performed at 150 °C for 2.5 hours. Unreacted reactants were removed from the polymerized product after completion of the polymerization through a degassing process, and thus a resin composition was prepared.

### Examples 2 and 3 and Comparative Examples 1 and 2: Preparation of resin compositions

Resin compositions were prepared in the same manner as in Example 1, except that amounts of the purified C₉ oil fraction, viscosity regulator, molecular weight regulator, styrene monomer, and xylene solvent were controlled to be those shown in Table 1.

**Table 1**

| | Modified petroleum resin | | | Amount of styrene in modified petroleum resin (%) | Xylene | Styrene/xylene | Viscosity regulator |
|---|---|---|---|---|---|---|---|
| | Purified oil fraction | Styrene monomer | Molecular weight regulator | | | | |
| Example 1 | 12.52 | 45.61 | 1.34 | 76.7% | 20.53 | 2.22 | 20 |
| Example 2 | 42.06 | 16.1 | 1.34 | 27.1% | 20.5 | 1.27 | 20 |
| Example 3 | 8.25 | 46.75 | 5 | 77.9% | 20 | 2.33 | 20 |
| Comparative Example 1 | 80.09 | 0 | 1.25 | 0% | 0.03 | 0 | 18.63 |
| Comparative Example 2 | 70.7 | 10 | 1.3 | 12.2% | 18 | 0.55 | 0 |

### Evaluation Example 1: Viscosity measurement

A viscosity meter available from Brookfield was used. Spindle No.27 was used, and 10.5 g of the resin compositions prepared in Examples 1 to 3 and Comparative Examples 1 and 2 were added as samples in a chamber. After having 30 minutes of stabilizing time at 25 °C, viscosity values at which Torque had a value of 50 % were recorded in Table 2 by controlling the stirring-shaft RPM value.

### Evaluation Example 2: Gardner color measurement

The color measurement was performed using ASTM D1544 on the resin compositions prepared in Examples 1 to 3 and Comparative Examples 1 and 2. In particular, the resin compositions were added to rectangular quartz cells (having a width of 20 mm, a length of 40 mm, and a path length of 10 mm. The cells were equipped in the PFX195 COLORMETER to measure the Gardner color, and the results are shown in Table 2.

### Evaluation Example 3: Molecular weight evaluation

Weight average molecular weights (Mw), number average molecular weights (Mₙ), Z-average molecular weights (Mz), and dispersion degrees (MWD) in terms of polystyrene of the resin compositions prepared in Examples 1 to 3 and Comparative Examples 1 and 2 were obtained using gel permeation chromatography (model name: HP-1100, available from Hewlett-Packard Co., Ltd.). The polymer to be measured was dissolved in tetrahydrofuran to a concentration of 4000 ppm, and 100 µl of the sample was injected into the GPC. A mobile phase of the GPC was tetrahydrofuran, which was flowed at a flow rate of 1.0 mL/minute, and the analysis was performed at 30 °C. The column was prepared by connecting three Plgel (1,000+500+100Å) manufactured by Agilent in series. A refractive index (RI) detector (HP-1047A, available from Hewlett-Packard) was used as a detector measuring at 30 °C. The results are shown in Table 2.

### Evaluation Example 4: Aromaticity evaluation

Aromaticities of the resin compositions prepared in Examples 1 to 3 and Comparative Examples 1 and 2 were confirmed through the NMR analysis. The results are as shown in Table 2.

**Table 2**

| | Viscosi ty (cps@ 25°C) | Gardn er color | Aromaticit y | Number averag e molecul ar weight (Mn) | Weight averag e molecul ar weight ( Mw) | Z-averag e molecul ar weight (Mz) | Dispersion degree (MWD) |
|---|---|---|---|---|---|---|---|
| Example 1 | 7,050 | 6.7 | 43.2 | 273 | 564 | 4872 | 2.07 |
| Example 2 | 9,650 | 7.8 | 40.1 | 269 | 420 | 664 | 1.56 |
| Example 3 | 16,800 | 5.4 | 45.6 | 394 | 577 | 1393 | 1.47 |
| Comparative Example 1 | 29,000 | 10.3 | 35.3 | 256 | 380 | 556 | 1.48 |
| Comparative Example 2 | 82,000 | 10.5 | 47.7 | 302 | 425 | 625 | 1.41 |

As shown in the Tables, it was confirmed that the resin compositions of Examples 1 to 3 which were synthesized using pure styrene monomers as polymerization components and having a Gardner color of 10 or less satisfied appropriate viscosity ranges as compared to those of the resin compositions of Comparative Examples 1 and 2.

## Claims

1. A resin composition comprising:
a modified petroleum resin having a structure in which a molecular weight regulator is bonded to at least one terminus of both terminuses of an at least partially hydrogenated or non-hydrogenated petroleum resin,
wherein the modified petroleum resin comprises at least one styrene monomer-derived unit structure,
wherein a Gardner color of the resin composition is 10 or less.

2. The resin composition of claim 1, wherein an amount of the styrene monomer-derived unit structure is in a range of greater than 0 parts to less than 100 parts by weight based on 100 parts by weight of the modified petroleum resin.

3. The resin composition of claim 1, wherein the modified petroleum resin comprises at least one C₉ mixed oil fraction-derived unit structure.

4. The resin composition of claim 3, wherein the C₉ mixed oil fraction-derived unit structure comprises vinyltoluene, α-methylstyrene, styrene, dicyclopentadiene, indene, trans-betastyrene, and methylindene.

5. The resin composition of claim 1, wherein the modified petroleum resin has a structure in which a molecular weight regulator is bonded to both of the terminuses.

6. The resin composition of claim 1, wherein the resin composition has
a number average molecular weight (Mn) in a range of 200 to 400,
a weight average molecular weight (Mw) in a range of 400 to 700,
a Z-average molecular weight (Mz) in a range of 650 to 4000,
a viscosity measured at 25 °C in a range of 5,000 cps to 50,000 cps, and
a glass transition temperature in a range of -40 °C to -25 °C.

7. The resin composition of claim 1, wherein the molecular weight regulator comprises a mercaptan compound comprising at least one thiol group.

8. The resin composition of claim 7, wherein the mercaptan compound is selected from ethyl mercaptan, butyl mercaptan, hexyl mercaptan, octyl mercaptan, dodecyl mercaptan, phenyl mercaptan, benzyl mercaptan, mercaptoethanol, thiolglycolic acid, mercaptopropionic acid, pentaerythritol tetrakis(3-mercapto)propionate, and any mixture thereof.

9. The resin composition of claim 1, wherein the resin composition further comprises a viscosity regulator.

10. The resin composition of claim 9, wherein the viscosity regulator comprises a low-viscosity liquid resin having a viscosity in a range of 20 cps to 500 cps at 25 °C.

11. The resin composition of claim 10, wherein the low-viscosity liquid resin is selected from hydrogenated dicyclopentadiene (DCPD)-C₉ copolymer resins, hydrogenated DCPD resins, and mixtures thereof.

12. The resin composition of claim 9, wherein
the molecular weight regulator is comprised at an amount in a range of greater than 0 parts to and equal to or less than 15 parts by weight based on 100 parts by weight of the total weight of the resin composition, and
the viscosity regulator is comprised at an amount in a range of greater than 0 parts and equal to or less than 40 parts by weight based on 100 parts by weight of the total weight of the resin composition.

13. The resin composition of claim 1, wherein
a viscosity of the resin composition measured at 25 °C is in a range of 5,000 cps to 17,000 cps, and
the resin composition has aromacity in a range of 25 % to 70 %.

14. A method of preparing a resin composition, the method comprising:
performing polymerization by adding a polymerization catalyst and/or heat to a solution comprising at least one selected from a C₅ monomer, a C₅ mixed oil fraction, a C₉ monomer, a C₉ mixed oil fraction, a cyclic diolefin monomer, and a linear olefin monomer; and a molecular weight regulator to obtain a polymerization product,
wherein the polymerization product comprises at least one styrene monomer-derived unit structure,
wherein a Gardner color of the resin composition is 10 or less.

15. The method of claim 14, wherein the solution further comprises a styrene monomer and a xylene solvent.

16. The method of claim 15, wherein the styrene monomer and the xylene solvent are comprised in the solution at a ratio in a range of 4:1 to 1:1 based on weight.

17. The method of claim 14, wherein the solution comprises a C₉ mixed oil fraction, the C₉ mixed oil fraction comprising vinyltoluene, α-methylstyrene, styrene, dicyclopentadiene, indene, and methylindene.

18. The method of claim 14, wherein the molecular weight regulator comprises a mercaptan compound comprising at least one thiol group.

19. The method of claim 14, wherein the resin composition comprises a viscosity regulator.

20. The method of claim 19, wherein the viscosity regulator comprises a low-viscosity liquid resin having a viscosity in a range of 20 cps to 500 cps at 25 °C.

21. The method of claim 19, wherein
the molecular weight regulator is comprised at an amount in a range of greater than 0 parts and equal to or less than 15 parts by weight based on 100 parts by weight of the total weight of the resin composition, and
the viscosity regulator is comprised at an amount in a range of greater than 0 parts and up to 40 parts by weight based on 100 parts by weight of the total weight of the resin composition.

22. The method of claim 14, wherein the polymerization catalyst is a Lewis acid catalyst selected from AlCl₃, BF₃, SnCl₄, TiCl₄, AgClO₄, I₂, and a mixture of at least two thereof.

23. The method of claim 14, wherein the adding of heat is performed by increasing a temperature from 100 °C to 300 °C.

24. The method of claim 19, wherein the polymerization product comprises a modified petroleum resin and a viscosity regulator,
wherein the modified petroleum resin has a structure in which at least one selected from a C₅ monomer, a C₅ mixed oil fraction, a C₉ monomer, a C₉ mixed oil fraction, a cyclic diolefin monomer, and a linear olefin monomer is polymerized, and the molecular weight regulator is bonded to at least one terminus of both terminuses of an at least partially hydrogenated or non-hydrogenated petroleum resin.

25. A coating composition comprising the resin composition of any one of claims 1 to 13.

26. A paint composition comprising the coating composition of claim 25.
